Europäisches Patentamt

(19) European Patent Office

Office européen des brevets

(11) Publication number: **0 207 918**

**A2**

(12) # EUROPEAN PATENT APPLICATION

(21) Application number: 86850237.8

(51) Int. Cl.⁴: **B 29 C 45/23**

(22) Date of filing: 30.06.86

(30) Priority: 01.07.85 SE 8503264

(43) Date of publication of application:
07.01.87 Bulletin 87/2

(84) Designated Contracting States:
DE FR GB IT SE

(71) Applicant: **Forsheda AB**

S-330 12 Forsheda(SE)

(72) Inventor: **Wästlund, Karl-Gustav**

S-330 12 Forsheda(SE)

(72) Inventor: **Landh, Vincent**

S-330 12 Forsheda(SE)

(74) Representative: **Hellborg, Torild et al,**
H. Albihns Patentbyra AB Box 7664
S-103 94 Stockholm(SE)

(54) An arrangement in rotatable plugs.

(57) The invention relates to an arrangement in a rotatable plug (7) for regulating the delivery of extrudable material under pressure to an extrusion nozzle (1), particularly for a machine for extruding rubber material. The rotatable plug (7) is substantially of cylindrical form and extends transversely through a delivery channel (3) provided in the extrusion nozzle (1), with the axis of rotation of the plug extending substantially at right angles to the longitudinal axis of the delivery channel (3). The rotatable plug (7) is provided with a through-passing passageway (9) extending at right angles to the axis of rotation of the plug, this channel in the open position of the plug (7) forming a part of the delivery channel (3), and in the closed position of the plug (7) being arranged to extend substantially at right angles to the delivery channel (3), which is therewith closed. According to the invention the rotatable plug (7) is fitted with at least one sealing ring which extends around the periphery of the rotatable plug on each side of the throughpassing passageway, so as to provide a seal between the rotatable plug and its bearing surface on respective sides of the delivery channel in the extrusion nozzle. Each sealing ring has a substantially rectangular cross-sectional shape and is located in a respective groove of corresponding cross-section in the rotatable plug, and is slotted by means of a groove which forms an acute angle with the end surfaces of the sealing ring.

Croydon Printing Company Ltd.

## An arrangement in rotatable plugs

The present invention relates to an arrangement in a
rotatable plug intended for regulating the flow of pressurized extrudable material to an extrusion nozzle, particularly for a machine for extruding rubber material, the
rotatable plug having a substantially cylindrical form and
extending transversely through a delivery channel in the
nozzle with the axis of rotation of the plug located substantially at right angles to the longitudinal axis of the
channel, the plug having provided therein a passageway
which in the open position of the rotatable plug forms
part of the delivery channel and in the closed position of
the plug extends generally at right angles to the delivery
channel, which is therewith closed.

By extrudable material and extrusion nozzle as used here
and in the following is meant all manner of materials
which can be extruded, injected, sprayed or squirted and
appropriate nozzles herefor.

Rotatable plugs of the aforesaid kind are used in machines
for extruding rubber material, e.g. in rubber presses for
injection moulding apparatus, the rotatable plug being
used to control the delivery of heated, liquid rubber mixture. It will be appreciated that when in use the rotatable plug is subjected to the effect of rubber material of
high temperature and under high pressure. This results in
a relatively high degree of wear on the rotatable plug,
such that rubber material is able to leak past the plug
after only a relatively short time in use. The leakage of
rubber material represents a considerable cost, and in
order to reduce this cost it is necessary to replace the
rotatable plug at relatively short intervals, in certain
fields of application as often as once a month. Naturally,

2

0207918

this results in a high cost for the spare parts concerned, and also in a decrease in production.

The object of the invention is to provide an arrangement in a rotatable plug of the kind mentioned in the introduction, this arrangement avoiding the aforesaid drawbacks encountered with prior art rotatable plugs, and enabling the useful life of the plug to be lengthened, while decreasing the leakage of rubber material. This object is achieved in accordance with the present invention by providing the plug on each side of the throughpassing channel with at least one sealing ring arranged around the periphery of the plug, in order to obtain a seal between the rotatable plug and its bearing surface on respective sides of the delivery channel in the nozzle, said sealing ring having substantially a rectangular cross-sectional shape and being arranged in a groove of corresponding cross-section provided in the rotatable plug, and being slotted by means of a groove which forms an acute angle with the end surfaces of the sealing ring.

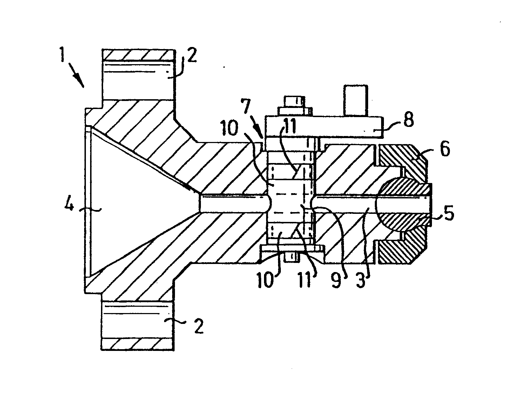

The invention will now be described in more detail with reference to the accompanying drawing, which illustrates schematically and in section an extrusion nozzle having a rotatable plug provided with an arrangement according to one embodiment of the invention.

The drawing illustrates an extrusion nozzle 1 which is intended for use in a rubber press for injection moulding of rubber material. The nozzle 1 is provided with bolt holes 2, through which attachment bolts (not shown) are intended to pass for securing the nozzle 1 to the rubber press. The nozzle 1 is also provided with a throughpassing delivery channel 3, having a conically widened end 4 facing the press. During an extrusion or injection process, rubber material is forced through the delivery channel 3 and flows out through an insert part 5 at the outer end of the channel 3. The insert part 5 is held in position by means of a ring 6, which holds the insert part 5 firmly to the nozzle 1 by means of a screw joint (not shown).

A rotatable plug 7 is journalled for rotation in a transverse bore in the nozzle 1. The plug 7 thus extends transversely through the delivery channel 3 and is substantially of cylindrical configuration with its axis of rotation arranged at right angles to the longitudinal axis of the delivery channel 3. The rotatable plug 7 is rotated by means of an arm 8 provided on one end of the plug. The plug 7 has provided therein a throughpassing passageway 9, which in the drawing is illustrated in broken lines in a position in which the plug is open, the passageway 9 then extending coaxially with the delivery channel 3 and forming a part thereof. When the plug 7 is rotated from the illustrated position to an extent such that the throughpassing passageway 9 in the plug no longer communicates with the delivery channel 3 the plug 7 then occupies its closed position, meaning that the delivery channel 3 is blocked.

When the plug 7 is located in the closed position, the plug is subjected to the effect of the rubber material present in the delivery channel 3, this material being under pressure and hot. In order to prevent rubber material from leaking in the axial direction of the plug 7, the plug is provided with a sealing ring 10 on each side of the throughpassing channel 9. In the illustrated embodiment, each sealing ring 10 is located in a groove in the rotatable plug 7. Each sealing ring 10 has a substantially rectangular cross-sectional shape and provides a seal between the cylindrical outer surface of the plug 7 and the corresponding bearing surface on respective sides of the delivery channel 3 in the nozzle 1. In addition, the sealing rings 10 improve the journal bearing of the rotatable plug 7 in the nozzle 1, this being particularly true when the sealing rings 10 are manufactured from a material having a low coefficient of friction, for example nylon or some like plastic material. The sealing rings 10 are slotted by means of grooves 11 which form acute angles with the end surfaces of respective sealing rings 10. The grooves 11 enable the sealing rings 10 to be fitted more readily to the plug 7, and do not appreciably impair the sealing properties of the rings 10. Moreover, when the rotatable plug 7 is used for the first time, rubber material will contact the sealing rings 10 and fill out gaps and grooves, thereby further improving the sealing function.

It will be understood that the invention is not restricted to the aforedescribed embodiment, and that modifications can be made within the scope of the following claims.

## CLAIMS

1. An arrangement in a rotatable plug (7) for regulating the delivery of extrudable material under pressure to an extrusion nozzle (1) particularly for a machine for extruding rubber material, the rotatable plug (7) being substantially cylindrical in shape and extending transversely through a delivery channel (3) in the extrusion nozzle (1), with its axis of rotation substantially at right angles to the longitudinal axis of the delivery channel (3), the rotatable plug (7) being provided with a throughpassing passageway (9) which extends at right angles to the said axis of rotation and which in the open position of the rotatable plug (7) forms part of the delivery channel (3) and in the closed position of said rotatable plug (7) is substantially at right angles to the delivery channel (3), which is therewith closed, characterized in that the rotatable plug (7) is provided on each side of the throughpassing passageway (9) with at least one sealing ring (10) arranged around the periphery of the rotatable plug (7) so as to provide a seal between the rotatable plug (7) and its bearing surface on respective sides of the delivery channel (3) in the extrusion nozzle (1), said each sealing ring (10) having a substantially rectangular cross-sectional shape and being located in a groove of corresponding cross-section in the rotatable plug (7), and being slotted by means of a groove (11) which forms an acute angle with the end surfaces of said each sealing ring (10).

2. An arrangement according to Claim 1, characterized in that each sealing ring (10) is manufactured from a material having a low coefficient of friction.